Europäisches Patentamt

European Patent Office

Office européen des brevets

(19)

(11) Veröffentlichungsnummer: **0 247 105**
**B1**

(12) **EUROPÄISCHE PATENTSCHRIFT**

(45) Veröffentlichungstag der Patentschrift: 09.05.90

(51) Int. Cl.⁵: **F 16 D 25/063**, F 16 D 13/68

(21) Anmeldenummer: 86906827.0

(22) Anmeldetag: 26.11.86

(86) Internationale Anmeldenummer:
PCT/EP86/00685

(87) Internationale Veröffentlichungsnummer:
WO 87/03348 04.06.87 Gazette 87/12

(54) LAMELLENKUPPLUNG.

(30) Priorität: 26.11.85 DE 3541755

(43) Veröffentlichungstag der Anmeldung:
02.12.87 Patentblatt 87/49

(45) Bekanntmachung des Hinweises auf die
Patenterteilung:
09.05.90 Patentblatt 90/19

(84) Benannte Vertragsstaaten:
AT BE CH DE FR GB IT LI NL SE

(56) Entgegenhaltungen:
CH-A- 280 607
DE-B-1 291 578
US-A-2 540 965
US-A-2 738 864

(73) Patentinhaber: J.M. Voith GmbH
Sankt Pöltener Strasse 43
D-7920 Heidenheim (DE)

(72) Erfinder: STODT, Enno
Waiblinger Weg 8
D-7920 Heidenheim (DE)

**Beschreibung**

Die Erfindung betrifft eine Lamellenkupplung, wie sie im Oberbegriff des Anspruchs 1 vorausgesetzt ist.

Nasse Lamellenkupplungen neigen im ausgerückten Zustand dazu, daß die sich mit der Antriebswelle drehenden Lamellen die mit der Abtriebswelle verbundenen Lamellen mitzunehmen versuchen. Dies geschieht, weil zwischen den Lamellen ein Ölfilm vorhanden ist. Dadurch wird ein unerwünschtes Schleppmoment erzeugt, welches noch eine gewisse Kraftübertragung zwischen Antriebswelle und Abtriebswelle bewirkt. Um dieses störende Schleppmoment zu verringern, hat man die Lamellen mit sinusförmigem Profil ausgebildet, die beim Lösen durch die Eigenfederung ein Trennen des gesamten Lamellenpaketes bewirken.

Ferner ist es aus der DE—C—823 082 bekannt, zwischen den mit dem Kupplungskorb drehfest verbundenen Außenlamellen oder zwischen den mit der Nabe drehfest verbundenen Innenlamellen Spreizglieder einzufügen, welche die Lamellen des Außenpaketes oder die Lamellen des Innenpaketes bei ausgerückter Kupplung auseinanderspreizen, damit sie nicht mehr an den Lamellen des jeweils anderen Paketes kleben sollen. Da jedoch nur ein einziges Lamellenpaket von den ringscheibenförmig mit beidseitig aufgebrachter elastischer ölbeständiger Masse ausgebildeten Spreizgliedern gespreizt wird, können die dazwischen befindlichen nicht gespreizten Lamellen des anderen Paketes dennoch an den Lamellenflächen des gespreizten Paketes anhaften und ein Reibmoment übertragen. Ferner ist es bekannt (beispielsweise aus DE—B—26 01 507), sowohl zwischen den Lamellen des Innenpaketes als auch zwischen den Lamellen des Außenpaketes jeweils Spreizglieder vorzusehen, so daß jedes Lamellenpaket für sich gespreizt wird. Auch hierbei kann jedoch ein Lamellenpaket einseitig am anderen Lamellenpaket anhaften und dabei ein Schleppmoment übertragen. Bei einer Variante dieser Lösung gemäß der DE—C—33 20 977 werden jeweils die Außenlamellen durch Federzungen in eine Richtung gedrückt, und die Innenlamellen werden durch andere Federzungen in die entgegengesetzte Richtung gedrückt, so daß beim Lösen der Kupplung die Außen- und Innenlamellen voneinander weggedrückt werden. Dabei müssen jedoch die Federzungen gegenseitig so bemessen werden, daß die auf einer Seite auseinandergedrückten Außen- und Innenlamellen nicht auf ihren anderen Seiten zusammengedrückt werden. Außerdem ist der Aufwand der Federzungen beträchtlich.

Die US—A—3,397,761 beschreibt eine weitere bekannte Lamellenkupplung mit nur einer einzigen Innenlamelle (als zweite Kupplungshälfte). Zum möglichst vollkommenen Lösen der beiden Kupplungshälften sind elastische Spreizglieder vorgesehen, von denen jedes einerseits an der Innenlamelle und andererseits an einem Element der ersten Kupplungshälfte angreift. Die Spreiz-glieder sind an der Innenlamelle befestigt; sie befinden sich in einem verhältnismäßig großen Abstand von der Kupplungsdrehachse in der Nähe des radial inneren Randes der Kupplungs-Reibflächen. Aufgrund dieser Anordnung verursachen sie im ausgerückten Zustand der Kupplung, wenn sie an den Bauteilen der ersten Kupplungshälfte gleiten, ein immer noch verhältnismäßig großes Schleppmoment. Auch besteht die Gefahr, daß sie vorzeitig verschleißen.

Die Aufgabe der Erfindung besteht in der Schaffung einer nassen Lamellenkupplung, bei der im gelösten Zustand weder durch ein Aneinanderhaften von Reibflächen infolge eines zwischen den Lamellen vorhandenen Flüssigkeitsfilmes noch durch Spreizglieder, welche die Reibflächen voneinander abrücken sollen, ein nennenswertes Schleppmoment erzeugt wird.

Diese Aufgabe wird durch die im im Kennzeichnenden Teil von Patentanspruch 1 angegebenen Merkmale gelöst. Danach wird gemäß der Erfindung eine Lamellen kupplung geschaffen bei der zum Lösen der Reibflächen elastische Spreizglieder (Tellerfedern) vorgesehen sind, von denen jedes einerseits an der Innenlammelle (also an der zweiten Kupplungshälfte) und andererseits an einem Element der ersten bzw. zweiten Kupplungshälfte angreift. Entscheidend ist, daß an jedem Reibflächen-Paar wenigstens ein derartiges Spreizglied vorhanden ist, so daß beim Ausrücken der Kupplung sämtliche Reibflächenpaare gespreizt und belüftet werden. Entscheidend ist außerdem, daß außer dem zum Einrücken der Kupplung dienenden ersten Betätigungselement zum Ausrücken der Kupplung ein zweites, entgegenwirkendes Betätigungselement vorgesehen ist. Somit wird beim Ausrücken der Kupplung das erste Betätigungselement mit Hilfe des zweiten Betätigungselements, also nicht mit Hilfe der Spreizglieder, in seine Ausgangsstellung gebracht. Die elastischen Spreizglieder haben somit allein die Aufgabe, *nach* dem erfolgten Ausrücken der Kupplung die Reibflächen-Paare vollends voneinander zu lösen. Dementsprechend können die elastischen Spreizglieder schwächer dimensioniert werden. Diese Maßnahme wirkt schon in Richtung einer Verringerung desjenigen Schleppmomentes, welches durch das Gleiten der Spreizglieder verursacht wird. (Bei den genannten zwei Betätigungselementen kann es sich um zwei unterschiedliche oder zwei gleichartige Betätigungselemente handeln oder um ein doppelt wirkendes Betätigungselement, z.B. um eine doppelt wirkende Zylinder-Kolben-Einheit.)

Durch die erfindungsgemäße Anordnung der Spreizglieder (Tellerfedern) wird nun nochmals eine weitere wesentliche Verringerung desjenigen Schleppmomentes erzielt, welches (bei ausgerückter Kupplung) durch das Gleiten der Spreizglieder verursacht wird. Zwar ist aus der GB—A—955,852 schon eine Lamellenkupplung bekannt, worin Tellerfedern als elastische Spreizglieder verwendet sind; diese greifen jedoch beiderseits nur an den Innenlamellen an, so daß ein vollkommenes Lösen und Belüften der Reibflächen nicht gewährleistet ist. Im Gegensatz hierzu stützt sich gemäß der Erfindung jede Tellerfeder mit ihrem radial äußeren Rand gegen ein Element der ersten Kupplungshälfte und mit ihrem radial inneren Rand gegen die Innenlamelle bzw. eine der Innenlamellen, also gegen ein Element der zweiten Kupplungshälfte. Wesentlich ist hierbei, daß der radial äußere Rand jeder Tellerfeder entweder mittels Formschluß oder mittels einer Reibkraft derart an der ersten Kupplungshälfte anliegt, daß die Tellerfeder zumindest überwiegend mit der ersten Kupplungshälfte rotiert. Dies bedeutet mit anderen Worten: Im ausgerückten Zustand der Kupplung besteht zwischen jeder Tellerfeder und der ersten Kupplungshälfte keine oder nur eine geringe Drehzahldifferenz. Somit erscheint die unvermeidbare Drehzahldifferenz ausschließlich oder zumindest überwiegend am radial inneren Rand der Tellerfedern, der gemäß der Erfindung mit einer Gleitfläche versehen ist, die an der Innenlamelle anliegt. Somit findet der unvermeidbare Gleitvorgang in einer wesentlich geringeren Entfernung von der Kupplungsdrehachse statt als beim Stand der Technik. Das aus diesem Gleitvorgang resultierende Schleppmoment wird somit wesentlich reduziert.

Um Herstellung und Montage der erfindungsgemäßen Lamellenkupplung zu erleichtern, wird an der Kontaktstelle des äußeren Randes jeder Tellerfeder mit der ersten Kupplungshälfte eine reibschlüssige Verbindung bevorzugt. Hierzu dienen die in den Ansprüchen 2 bis 4 angegebenen Merkmale. Die Merkmale der weiteren Unteransprüche dienen hauptsächlich zur weiteren Verringerung des bei gelöster Kupplung aus der Drehzahldifferenz zwischen Tellerfedern und der Innenlammelle bzw. den Innenlamellen resultierenden Schleppmomentes.

Ausführungsbeispiele der Erfindung werden nachfolgend anhand von Schemazeichnungen erläutert.

Figur 1 zeigt eine Lamellenkupplung mit Spreizgliedern in Form ringförmiger Tellerfedern.

Figur 2 zeigt eine der Tellerfedern im Schnitt.

Figur 3 zeigt eine der Tellerfedern, verkleinert, in Ansicht.

Figur 4 zeigt ein Detail aus Figur 1 bei ausgerückter Lamellenkupplung.

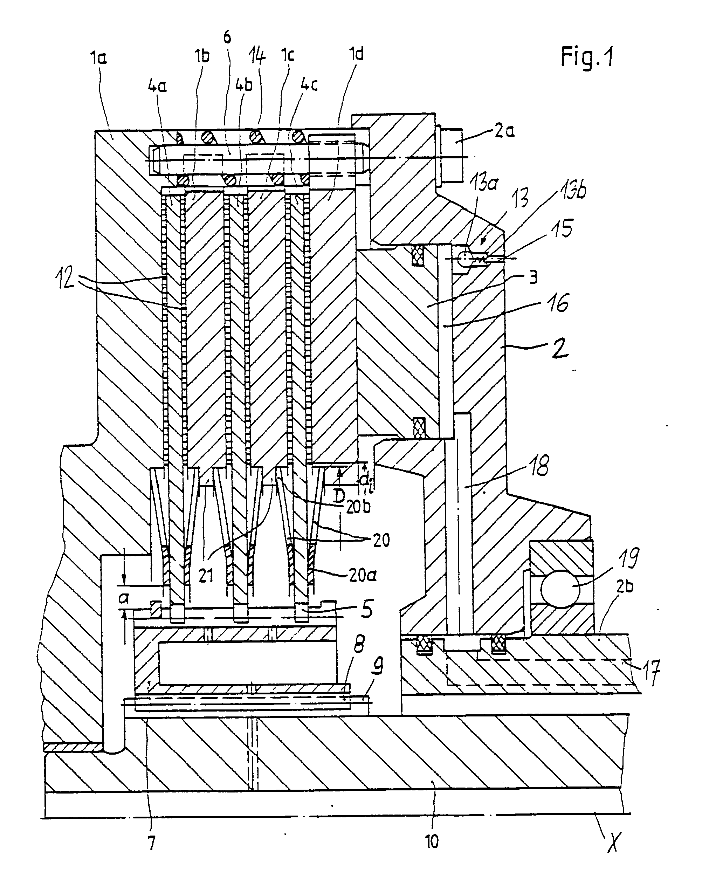

Die in Figur 1 dargestellte Lamellenkupplung hat eine erste Kupplungshälfte und eine zweite Kupplungshälfte. Elemente der ersten Kupplungshälfte sind ein Kupplungsgehäuse 1a und drei Außenlamellen 1b bis 1d, die an ihrem Außenumfang drehfest aber axial verschiebbar mit dem Kupplungsgehäuse 1a verbunden sind. Einige am Umfang verteilte Bolzen 6 dienen zur Führung von Druckfedern 14, welche das Kupplungsgehäuse 1a und die äußere Außenlamelle 1d auseinanderdrücken. Ein Tragring 2 ist mittels Schrauben 2a mit dem Kupplungsgehäuse 1a verbunden und mittels eines Wälzlagers 19 auf einem feststehenden Lagerhals 2b gelagert. Letzterer kann z.B. Teil eines Getriebegehäuses sein.

Elemente der zweiten Kupplungshälfte sind drei Innenlamellen 4a, 4b und 4c, die zwischen je zwei Elementen 1a bis 1d der ersten Kupplungshälfte angeordnet sind. Die Innenlamellen 4a bis 4c haben an ihrem Innenumfang Zähne 5, die in eine Außenverzahnung einer Nabe 7 eingreifen. Diese ruht mittels einer weiteren Verzahnung 8, 9 drehfest, jedoch axial verschiebbar auf einer Welle 10, die z.B. die Eingangswelle eines Getriebes sein kann.

Im Tragring ist ein ringförmiger Zylinderraum 16 vorgesehen, in dem ein Ringkolben 3 angeordnet ist. Dieser kann, durch Zuführen eines Druckmediums über die Leitungen 17 und 18 in den Zylinderraum 16, die Lamellen aneinander und gegen das Kupplungsgehäuse 1a drücken. Hierdurch wird die Lamellenkupplung eingerückt. In Fig. 1 ist die Lamellenkupplung im eingerückten Zustand dargestellt.

Vom Zylinderraum 16 führt ein Entleerkanal 15 nach außen; darin ist ein selbsttätiges Entleerventil 13 angeordnet. Solange die Lamellenkupplung durch den im Zylinderraum 16 herrschenden Druck im eingerückten Zustand gehalten wird, hält ein beweglicher Ventilkörper (z.B. Kugel 13a) das Entleerventil 13 geschlossen, so daß das Druckmedium nicht entweichen kann. Sobald die Leitungen 17 und 18 und der Zylinderraum 16 von Druck entlastet werden, öffnet sich das Entleerventil 13, z.B. unter Wirkung einer Feder 13b oder durch die auf den Ventilkörper 13a wirkende Fliehkraft. Hierdurch kann sich der Zylinderraum 16 rasch entleeren, so daß die Druckfedern 14 die Außenlamelle 1d und den Ringkolben 3 rasch verschieben können (im Falle der Anordnung gemäß Figur 1 nach rechts).

Beispielsweise an den Innenlamellen 4a, 4d und 4c sind beidseitig Reibbeläge 12 befestigt, die in der Zeichnung schematisch mit achsparalleler Schraffur veranschaulicht sind. Im ausgerückten Zustand der Lamellenkupplung sollen diese Reibbeläge 12 möglichst vollkommen von den Elementen 1a bis 1d der ersten Kupplungshälfte, mit denen sie im eingerückten Zustand der Kupplung in Kontakt stehen, gelöst werden. Hierzu sind elastische Spreizglieder 20 vorgesehen, un zwar in Form von speziellen Tellerfedern, die konzentrisch zur Kupplungsdrehachse X angeordnet sind. Jede diese Tellerfedern 20 hat einen radial inneren Randbereich 20a und einen radial äußeren Randbereich 20b. Mit ihrem radial inneren Randbereich 20a stützt sie sich an einer der Innenlamellen (z.B. 4a) ab, mit ihrem äußeren Randbereich 20b dagegen an einem der Elemente der ersten Kupplungshälfte, z.B. an der Außenlamelle 1b. Die an den Elementen 1a bis 1d der ersten Kupplungshälfte vorgesehenen Stirnflächen, an denen die Tellerfedern 20 anliegen, befinden sich alle im radial inneren Bereich der ersten Kupplungshälfte oder, mit anderen Worten, radial innerhalb des mit $d_i$ bezeichneten Innendurchmessers der Reibbeläge 12. Die Außenlamellen 1b bis 1d, die dicker sind als die Innenlamellen 4a—4c, haben zur Bildung der Anlageflächen für die Tellerfedern 20 je einen radial inneren Vorsprung 21.

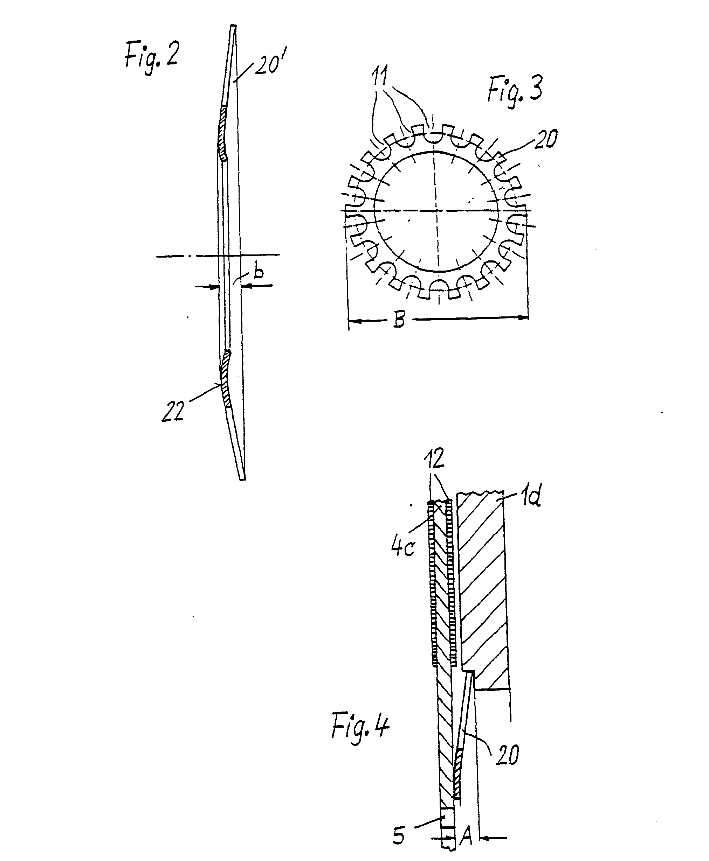

Damit die Tellerfedern 20 stets (zumindest überwiegend) mit den Elementen 1a bis 1d der ersten Kupplungshälfte rotieren, ist folgendes vorgesehen: An jedem der Elemente 1a bis 1d sind für die Tellerfedern 20 kreiszylindrische Zentrierflächen mit dem Innendurchmesser D vorgesehen. Dieser ist gleich groß wie oder geringfügig kleiner als der Außendurchmesser B der entspannten Tellerfedern, d.h. der noch nicht in die Zentrierfläche eingesetzten Tellerfedern; siehe Figuren 2 und 3. Hierdurch rotieren auch im ausgerückten Zustand der Lamellenkupplung die Tellerfedern 20 stets wenigstens angenähert mit der Drehzahl der ersten Kupplunghälfte. Somit findet ein Gleitvorgang ausschließlich oder überwiegend nur am inneren Randbereich 20a statt, also dort wo die Tellerfedern 20 an den Innenlamellen 4a bis 4c anliegen. Der Innendurchmesser der Tellerfedern 20 ist so gewählt, daß sowohl im gespannten als auch im entspannten Zustand der Tellerfedern ein Sicherheitsabstand a (Fig. 1) zur Verzahnung 5 auf der Nabe 7 verbleibt. Dadurch wird ein Kontakt verhindert, der bei einer Relativdrehzahl im ausgerückten Zustand der Kupplung Verschleiß an der Verzahnung oder an der Tellerfeder hervorrufen würde.

Wie man am besten aus Figur 3 erkennt, haben die Tellerfedern 20 Schlitze 11, die sich vom radial außeren Rand 20b aus in Richtung zum inneren Rand 20a erstrecken. Wichtig ist, daß am inneren Rand 20a jeder Tellerfeder 20, abweichend von handelsüblichen Tellerfedern, eine Gleitfläche vorgesehen ist, so daß Verschleiß an den Gegengleitflächen der Innenlamellen 4a—4c vermieden wird. Die Gleitflächen der Tellerfedern 20 können gemäß Figur 1 im wesentlichen eben sein. Abweichend hiervon kann gemäß Figur 2 vorgesehen werden, daß die Tellerfedern 20' eine zur Innenlamelle hin gewölbte Gleitfläche 22 aufweisen.

Die Figur 4 zeigt eine der Innenlamellen 4c mit ihren Reibbelägen 12, die mit ihr zusammenwirkende äußere Außenlamelle 1d sowie die zwischen diesen beiden Elementen angeordnete Tellerfeder 20. Die genannten Elemente sind im ausgerückten Zustand der Lamellenkupplung dargestellt; denn zwischen den beiden Lamellen 1d und 4c ist ein deutlicher Spalt sichtbar. In diesem Zustand ist der mit A bezeichnete Abstand zwischen den stirnseitigen Anlageflächen der Lamellen, an denen die Tellerfeder 20 anliegt, größer als in Figur 1. Die Tellerfeder ist in diesem Zustand nahezu oder vollkommen entspannt. Mit anderen Worten: Im noch nicht eingebauten Zustand ist die axiale Länge b der Tellerfeder 20 oder 20' (siehe Figur 2) im wesentlichen gleich dem zuvor genannten Abstand A zwischen den Anlageflächen der Lamellen (z.B. 1d und 4c).

Durch die zuvor beschriebene Maßnahme liegt die Tellerfeder im ausgerückten Zustand der Kupplung höchstens mit einer verschwindend kleinen restlichen Federkraft an der Innenlamelle an. Da außerdem, aufgrund der weiter oben beschriebenen Maßnahmen, die Berührungsfläche zwischen der Tellerfeder 20 und der Innenlamelle sehr klein ist, und sich überdies in nur geringer Entfernung von der Kupplungsdrehachse X befindet, ist das durch die Tellerfedern 20 verursachte Schleppmoment vernachlässigbar klein. Daher eignet sich die beschriebene Lamellenkupplung besonders für Fahrzeugantriebe mit synchronisiertem Schaltgetriebe; denn derartige Schaltgetriebe müssen unter möglichst vollkommener Trennung vom Motor umgeschaltet werden.

## Patentansprüche

1. Lamellenkupplung mit einer ersten Kupplungshälfte und einer zweiten Kupplungshälfte sowie mit den folgenden Merkmalen:

a) die erste Kupplungshälfte umfaßt ein Kupplungsgehäuse (1a) und wenigstens eine Außenlamelle (1b, 1c, 1d), die an ihrem Außenumfang drehfest, jedoch axial verschiebbar mit dem Kupplungsgehäuse verbunden ist;

b) die zweite Kupplungshälfte umfaßt wenigstens eine scheibenförmige Innenlamelle (4a—4c), die an ihrem Innenumfang drehfest, jedoch axial verschiebbar mit einer Welle (10) verbindbar ist;

c) jede Innenlamelle (4a—4c) hat stirnseitige Reibflächen, an denen sie im eingerückten Zustand der Kupplung mit Elementen (1a—1d) der ersten Kupplungshälfte in Kontakt steht;

d) ein erstes Betätigungselement z.B. Hydraulik-Kolben (3), dient zum Einrücken der Kupplung;

e) zum Lösen der Reibflächen der wenigstens einen Innenlamelle (4a—4c) von den Elementen (1a—1d) der ersten Kupplungshälfte sind elastische Spreizglieder vorgesehen, wobei jedes der Spreizglieder als eine zur Kupplungsachse (X) im wesentlichen konzentriesche Tellerfeder (20) ausgebildet ist; gekennzeichnet durch die folgenden Merkmale

f) jede Tellerfeder (20) greift einerseits an der Innenlamelle (4a—4c) an und liegt mit ihrem radial äußeren Rand (20b) am radial inneren Bereich eines der Elemente (1a—1d) der ersten Kupplungshälfte an;

g) der äußere Rand (20b) jeder Tellerfeder (20) ist derart ausgebildet, daß die Tellerfeder zumindest überwiegend mit der ersten Kupplungshälfte (1a—1d) rotiert;

h) der radial innere, an der Innenlamelle (4a—4c) anliegende Rand (20a) jeder Tellerfeder (20) ist mit einer Gleitfläche (22) versehen;

i) ein zweites Betätigungselement z.B. Druckfeder (14) dient zum Ausrücken der Kupplung.

2. Lamellenkupplung nach Anspruch 1, dadurch gekennzeichnet, daß jede der Tellerfedern (20) mit ihrem radial äußeren Rand (20b) in einer kreiszylindrischen Zentrierfläche (mit Innendurchmesser D) ruht, die an einem der Elemente (1a—1d) der ersten Kupplungshälfte vorgesehen ist.

3. Lamellenkupplung nach Anspruch 2, dadurch gekennzeichnet, daß der Innendurchmesser (D) jeder Zentrierfläche geringfügig kleiner als der Außendurchmesser (B) der (noch nicht in die Zentrierfläche eingesetzten) Tellerfeder (20) ist.

4. Lamellenkupplung nach einem der Ansprüche 1 bis 3, dadurch gekennzeichnet, daß jede Tellerfeder (20) nach Art einer Außenzahnscheibe radiale Schlitze (11) aufweist, die ausgehend vom äußeren Rand der Tellerfeder, sich radial von außen nach innen erstrecken.

5. Lamellenkupplung nach einem der Ansprüche 1 bis 4, dadurch gekennzeichnet, daß die am inneren Rand jeder Tellerfeder (20') angeordnete Gleitfläche (22) zur Innenlamelle (4a—4c) hin gewölbt ist.

6. Lamellenkupplung nach einem der Ansprüche 2 bis 5, deren Innenlamelle (4a—4c) an ihrem radial inneren Rand mit einer Innenverzahnung (5) auf einem außen verzahnten Bauteil (z.B. Innennabe 7) ruht, dadurch gekennzeichnet, daß zwischen dem radial inneren Rand jeder Tellerfeder (20) und der Außenverzahnung des genannten Bauteils (7) ein Sicherheites-Abstand (a) vorgesehen ist.

7. Lamellenkupplung nach einem der Ansprüche 1 bis 6, dadurch gekennzeichnet, daß der Innendurchmesser (D) der Zentrierflächen kleiner als der Durchmesser ($d_l$) des radial inneren Randes der Reibflächen ist.

8. Lamellenkupplung nach einem der Ansprüche 1 bis 7, dadurch gekennzeichnet, daß die axiale Länge (b) jeder einzelnen Tellerfeder (20) im ungespannten Zustand im wesentlichen gleich dem im ausgerückten Zustand der Lamellenkupplung vorhandenen Abstand (A) zwischen den an den Lamellen (z.B. 1d und 4c) für die Tellerfedern (20) vorgesehenen Anlageflächen vorgesehen ist.

**Revendications**

1. Embrayage à disques comportant une première moitié d'embrayage et une deuxième moitié d'embrayage ainsi que les caractéristiques suivantes:

a) la première moitié d'embrayage comprend une cuvette d'embrayage (1a) et au moins un disque extérieur (1b, 1c, 1d) qui est bloqué en rotation sur son pourtour extérieur mais est relié à la cuvette d'embrayage en étant mobile dans le sens axial;

b) la deuxième moitié d'embrayage comprend au moins un disque intérieur en forme de plateau (4a—4c), qui est bloqué en rotation sur son pourtour intérieur mais peut être relié à un arbre (10) en étant mobile dans le sens axial;

c) chaque disque intérieur (4a—4c) a des surfaces de friction frontales au moyen desquelles il est mis en contact avec des éléments (1a—1d) de la première moitié d'embrayage à l'état embrayé;

d) un premier élément de commande, tel qu'un piston hydraulique par exemple (3), sert à provoquer l'engagement de l'embrayage;

e) il est prévu, pour détacher les surfaces de friction, au moins un disque intérieur (4a—4c) des éléments de la première moitié d'embrayage des éléments d'écartement élastiques, chacun de ces éléments d'écartement (20) étant essentiellement constitué par des ressorts à disques concentriques à l'axe de l'embrayage (X); caractérisé en ce que:

f) chaque ressort à disque (20) attaque d'une part le disque intérieur (4a—4c) et s'appuie radialement par un bord extérieur (20b) sur la région radiale intérieure d'un des éléments (1a—1d) de la première moitié d'embrayage;

g) le bord extérieur (20b) de chaque ressort à disque (20) est constitué de telle sorte que le ressort à disque tourne avec la première moitié d'embrayage (1a—1d), au moins pour l'essentiel;

h) le bord radial intérieur (20a) qui s'appuie sur le disque intérieur (4a—4c) de chaque ressort à disque (20) est pourvu d'une surface de glissement (22);

i) un deuxième élément de manoeuvre, tel qu'un ressort de pression par exemple (14) sert à débrayer l'embrayage.

2. Embrayage à disques selon la revendication 1, caractérisé en ce que chacun des ressorts à disque (20) repose par son bord extérieur radialement (20b) sur une surface de centrage cylindrique circulaire (de diamètre intérieur D), qui est prévue sur un des éléments (1a—1d) de la première moitié d'embrayage.

3. Embrayage à disques selon la revendication 2, caractérisé en ce que le diamètre intérieur (D) de chaque surface de centrage est légèrement inférieur au diamètre extérieur (B) du ressort à disque (20) non encore engagé sur la surface de centrage.

4. Embrayage à disques selon l'une des revendications 1 à 3, caractérisé en ce que chaque ressort à disque (20) présente, à la manière d'un disque à denture extérieure des échancrures radiales (11) qui, partant du bord extérieur du ressort à disque, s'étendent radialement de l'extérieur vers l'intérieur.

5. Embrayage à disques selon l'une des revendications 1 à 4, caractérisé en ce que la surface de glissement (22) disposé sur le bord intérieur de chaque ressort à disque (20') est bombée vers le disque intérieur (4a—4c).

6. Embrayage à disques selon l'une des revendications 2 à 5, dont le disque intérieur (4a—4c) repose par son bord radial intérieur et par une denture interne (5) sur un élément denté extérieurement (par exemple un moyeu intérieur 7), caractérisé en ce que, il est prévu un intervalle de sécurité (a) entre le bord radial intérieur de chaque ressort à disque (20) et la denture extérieure de l'élément précité.

7. Embrayage à disques selon l'une des revendications 1 à 6, caractérisé en ce que le diamètre intérieur (D) des surfaces de centrage est inférieur au diamètre ($d_l$) du bord intérieur radialement des surfaces de friction.

8. Embrayage à disques selon l'une des revendications 1 à 7, caractérisé en ce que la longueur axiale (b) de chaque ressort à disque (20) est, à l'état non vendu, prévue essentiellement égale à la distance (A) existant, en l'état débrayé de l'embrayage à disques, entre les surfaces d'appui prévues sur les disques (par exemple 1d et 4c) pour les ressorts à disques (20).

**Claims**

1. A disc clutch having a first clutch half and a second clutch half and having the following features:

a) the first clutch half comprises a clutch housing (1a) and at least one outer disc (1b, 1c, 1d), which on its outer periphery is connected to the clutch housing so that it is prevented from rotating but is axially displaceable;

b) the second clutch half comprises at least one discoid inner disc (4a—4c), which on its internal periphery can be connected to a shaft (10) so that it is prevented from rotating but is axially displaceable;

c) each inner disc (4a—4c) has front friction surfaces on which it is in contact with components (1a—1d) of the first clutch half when the clutch is engaged;

d) a first control device, e.g. hydraulic piston (3), serves to engage the clutch;

e) elastic expansion members are provided to release the friction surfaces of at least one inner disc (4a—4c) from the components (1a—1d) of the first clutch half, with each expansion member being designed as a cup spring (20) which is substantially concentric to the clutch axis (X); characterised by the following features:

f) each cup spring (20) acts firstly on the inner disc (4a—4c) and with its radially outer edge (20b) abuts the radially inner region of one of the components (1a—1d) of the first clutch half;

g) the outer edge (20b) of each cup spring (20) is constructed so that the cup spring rotates at least mainly with the first clutch half (1a—1d);

h) the radially inner edge (20a) of each cup spring (20) which abuts the inner disc (4a—4c) is provided with a sliding surface (22);

i) a second control device, e.g. compression spring 14), serves to disengage the clutch.

2. A disc clutch according to Claim 1, characterised in that each of the cup springs (20) rests with its radially outer edge (20b) in a circular cylindrical centering surface (having internal diameter D), which is provided on one of the components (1a—1d) of the first clutch half.

3. A disc clutch according to Claim 2, characterised in that the internal diameter (D) of each centering surface is slightly smaller than the external diameter (B) of the cup spring (20) (not yet inserted in the centering surface).

4. A disc clutch according to one of Claims 1 to 3, characterised in that each cup spring (20) in the manner of an outside toothed disc has radial slits (11) which extend radially from the outer edge of the cup spring in the inward direction.

5. A disc clutch according to one of Claims 1 to 4, characterised in that the sliding surface (22) disposed on the inner edge of each cup spring (20') is curved toward the inner disc (4a—4c).

6. A disc clutch according to one of Claims 2 to 5, with its inner disc (4a—4c) resting with its radially inner edge with internal cogging (5) on a component having external cogging (e.g inner hub 7), characterised in that a safety zone (a) is provided between the radially inner edge of each cup spring (20) and the outer cogging of said component (7).

7. A disc clutch according to one of Claims 1 to 6, characterised in that the internal diameter (D) of the centering surfaces is smaller than the diameter ($d_i$) of the radially inner edge of the friction surfaces.

8. A disc clutch according to one of Claims 1—7, characterised in that the axial length (b) of each individual cup spring (20) in the relaxed position is designed so that it is substantially equal to the distance (A) in the disengaged position of the disc clutch between the bearing surfaces provided on the disc (e.g.. 1d and 4c) for the cup springs (20).

Fig.1

*Fig. 2*

20'

b

22

*Fig. 3*

11

20

B

12

1d

4c

*Fig. 4*

20

5

A